# EUROPEAN PATENT APPLICATION

(11) **EP 3 846 298 A1**
(43) Date of publication of application: **07.07.2021**
(21) Application number: 20215830.9
(22) Date of filing: 18.12.2020
(51) Int. Cl.: H02B 7/06

(54) **PREFABRICATED SUBSTATION**

(30) Priority: 02.01.2020 CN 202020008178 U
(71) Applicant: Sungrow Power Supply Co., Ltd., Hefei, Anhui 230088 (CN)
(72) Inventor: Li, Xian, Hefei, Anhui 230088 (CN); Jiao, Shuaishuai, Hefei, Anhui 230088 (CN); Pan, Hanfei, Hefei, Anhui 230088 (CN); Cao, Yangyang, Hefei, Anhui 230088 (CN)
(74) Representative: Zacco Patent- und Rechtsanwalts GmbH

(57) **Abstract**

A prefabricated substation is provided, including: a housing and a low-voltage switchgear (4). The housing has a low-voltage chamber (1), the low-voltage chamber is provided with a first operation door (13); the low-voltage switchgear (4) is arranged in the low-voltage chamber (1), and the operating surface of the low-voltage switchgear (4) faces the first operation door (13). The prefabricated substation disclosed by the present application, by facing the operating surface of the low-voltage switchgear (4) to the first operating door (13), it makes it possible to operate the low-voltage switchgear (4) by opening the operating door (13). It is not necessary for staff to enter interior of the low-voltage chamber (1), that is, it is not necessary for staff to enter the interior of the housing, which facilitates the operating of the low-voltage switchgear (4) and meet safety requirements.

## Description

### TECHNICAL FIELD

The present disclosure relates to the technical field of power distribution, and in particular to a prefabricated substation.

### BACKGROUND

A prefabricated substation is widely used for advantages such as small volume, small occupation, low weight, low cost and high reliability. The prefabricated substation mainly includes: a housing, a low-voltage switchgear, a transformer, a ring main unit and a power distribution room. The housing has a low-voltage chamber, the low-voltage switchgear is arranged in the low-voltage chamber. A circuit breaker of the low-voltage switchgear is arranged on both sides, that is, one part of the circuit breaker is arranged inside, and the other part of the circuit breaker is arranged outside. If the inside part of the circuit breaker needs to be operated, the operation and maintenance personnel need to enter the interior of the housing to operate. The operating space of the low-voltage chamber is small, and the operation and maintenance personnel are difficult to operate, and the operation also does not meet the safety requirements.

In addition, the power distribution room of the housing and the ring main unit are arranged in the medium-voltage distribution room of the housing, and the power distribution room and the ring main unit are not isolated, which poses a great risk to personnel safety.

In addition, the housing has a transformer room, and the transformer is arranged in the transformer room, and a top cover of the transformer room cannot be opened, which is inconvenient for hoisting on site, operation, maintenance, and repair.

### SUMMARY

In view of this, a prefabricated substation is provided for facilitating the operation of a low-voltage switchgear.

The present disclosure provides the following technical solutions:
a prefabricated substation includes a housing and a low-voltage switchgear, and the housing has a low-voltage chamber, the low-voltage switchgear is arranged in the low-voltage chamber, a circuit breaker of the low-voltage switchgear is arranged on one side, and the low-voltage chamber is provided with a first operation door opposite to the circuit breaker.

Preferably, the circuit breaker includes a molded case circuit breaker and a frame circuit breaker, and the molded case circuit breaker is located at the bottom of the frame circuit breaker.

Preferably, the frame circuit breaker is provided with a connecting part connected to a transformer, and the connecting part is located at the top of the low-voltage chamber.

Preferably, two groups of the low-voltage switchgears are provided, and two first operation doors are provided and are respectively located on both sides of the low-voltage chamber;
one circuit breaker of one low-voltage switchgear is opposite to one first operation door, and another circuit breaker of the other low-voltage switchgear is opposite to the other first operation door;
the two groups of the low-voltage switchgears are provided with a maintenance channel, a space for an outlet line, and a space for installing cooling fan.

Preferably, the housing includes a transformer room and a medium-voltage distribution room, and a transformer of the prefabricated substation is arranged in the transformer room, a ring main unit and the power distribution communication unit of the prefabricated substation are arranged in the medium-voltage power distribution room;
the low-voltage chamber, the transformer room and the medium-voltage power distribution room are sequentially distributed along a length direction of the housing.

Preferably, the low-voltage switchgear and the transformer of the prefabricated substation are electrically connected through a connector;
the prefabricated substation further includes a waterproof member arranged on the connector to make the connector waterproof.

Preferably, the housing includes a transformer room for placing a transformer, and an openable and closable top cover is arranged on the top of the transformer room.

Preferably, the transformer of the prefabricated substation is a double-split transformer or a double-winding transformer.

Preferably, the protection level of the prefabricated substation is IP54.

Preferably, the housing includes: a medium-voltage power distribution room, and a partition dividing the medium-voltage power distribution room into a first chamber and a second chamber;
a ring main unit of the prefabricated substation is arranged in the first chamber, and a power distribution communication unit of the prefabricated substation is arranged in the second chamber;
a second operation door is arranged on the side of the second chamber away from the first chamber, and a third operation door is arranged on the side of the first chamber away from the second chamber.

The prefabricated substation provided by the present disclosure, by arranging the circuit breaker of the low-voltage switchgear on one side, and arranging the first operation door opposite to the circuit breaker in the low-voltage chamber, the circuit breaker may be operated once the first operation door opens, and there is no need for staff to enter the interior of the low-voltage chamber, thereby facilitating the operation of the low-voltage switchgear, and meeting safety requirements.

### BRIEF DESCRIPTION OF THE DRAWINGS

For more clearly illustrating embodiments of the present disclosure or the technical solutions in the conventional technology, drawings to be used in the description of the embodiments or the conventional technology will be briefly described hereinafter. Apparently, the drawings in the following description are only some embodiments of the present disclosure. For those skilled in the art, other drawings may be obtained based on the provided drawings without any creative work.
Figure 1 is a schematic structural diagram of a prefabricated substation provided by an embodiment of the present disclosure;
Figure 2 is an internal structural diagram of a prefabricated substation provided by an embodiment of the present disclosure;
Figure 3 is a schematic structural diagram of a low-voltage switchgear in a prefabricated substation provided by an embodiment of the present disclosure;
Figure 4 is a schematic structural diagram of the first operation door and the second operation door opened in a prefabricated substation provided by an embodiment of the present disclosure;

### DETAILED DESCRIPTION OF THE EMBODIMENTS

The following will clearly and completely describe the technical solutions in the embodiments of the present disclosure in conjunction with the accompanying drawings in the embodiments of the present disclosure. Obviously, the described embodiments are only a part of the embodiments of the present disclosure, not all embodiments. Based on the embodiments of the present disclosure, all other embodiments obtained by those having ordinary skill in the art without creative work shall fall within the protection scope of the present disclosure.

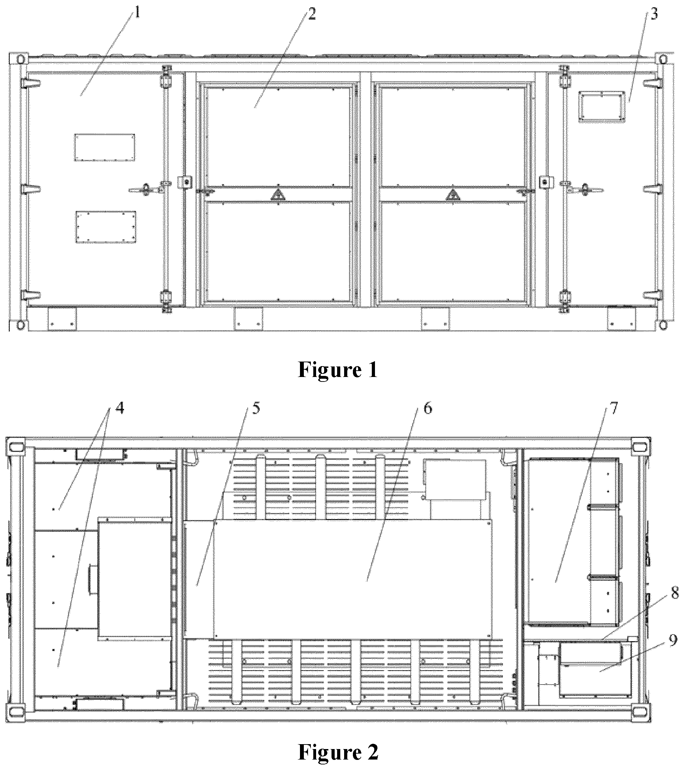

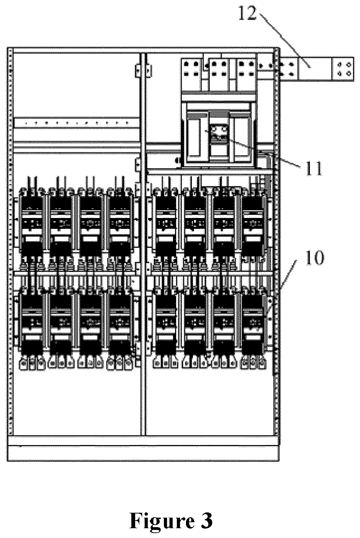

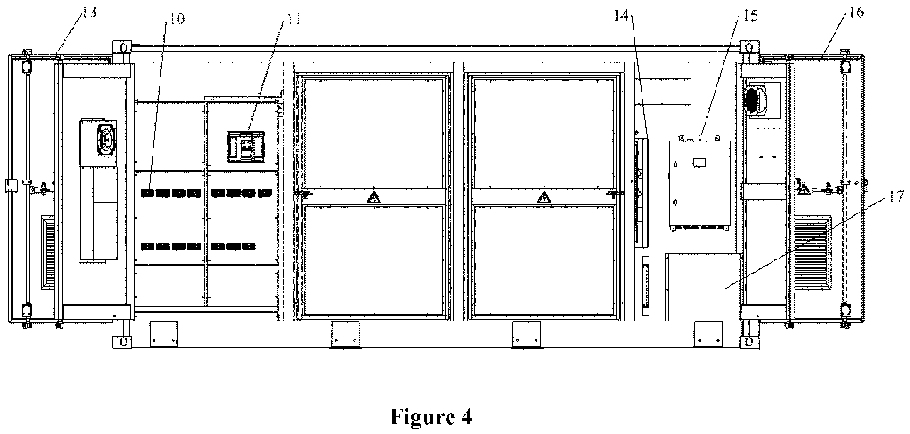

As shown in Figure 1 to 4, a prefabricated substation provided by the present disclosure includes: a housing, a low-voltage switchgear 4, a transformer 6, a ring main unit 7 and a power distribution communication unit 9. The housing has a low-voltage chamber 1, a transformer room 2, and a medium-voltage distribution room 3. The low-voltage switchgear 4 is arranged in the low-voltage chamber 1, the transformer 6 is arranged in the transformer room 2, and the ring main unit 7 and the power distribution communication unit 9 are both arranged in the medium-voltage distribution room 3. The power distribution communication unit 9 includes a power distribution device and a communication box 15.

The circuit breaker of the low-voltage switchgear is arranged on one side, that is, the entire circuit breaker of the low-voltage switchgear is arranged on one surface, and the low-voltage chamber 1 is provided with a first operation door 13 opposite to the circuit breaker. The prefabricated substation provided by the present application, by arranging the circuit breaker of the low-voltage switchgear 4 on one side, and arranging the first operation door 13 opposite to the circuit breaker in the low-voltage chamber, allows the circuit breaker to be operated by the opening of the first operation door 13, and there is no need for staff to enter the interior of the low-voltage chamber 1, that is, there is no need for staff to enter the interior of the housing, thereby facilitating the operation of the low-voltage switchgear 4, and meeting safety requirements.

The circuit breaker of the low-voltage switchgear 4 includes a molded case circuit breaker 10 and a frame circuit breaker 11. The circuit breaker is arranged on one side, and the molded case circuit breaker 10 and the frame circuit breaker 11 are sequentially arranged along a height direction of the housing, that is, the molded case circuit breaker 10 and the frame circuit breaker 11 are sequentially arranged along the height direction of the low-voltage chamber 1. In order to facilitate installation and operation, the molded case circuit breaker 10 is preferably located at the bottom of the frame circuit breaker 11.

Alternatively, the molded case circuit breaker 10 may also be located at the top of the frame circuit breaker 11, which is not limited to the above-mentioned embodiment.

In the above structure, the molded case circuit breaker 10 and the frame circuit breaker 11 are electrically connected, and the frame circuit breaker 11 and the transformer 6 are electrically connected. In order to facilitate wiring, the frame circuit breaker 11 is provided with a connecting part 12 connected to the transformer 6, and the connecting part 12 is located at the top of the low-voltage chamber 1.

If a large-capacity prefabricated substation is required, two groups of the low-voltage switchgears 4 are preferably provided, and two first operation doors 13 are provided and are respectively located on both sides of the low-voltage chamber 1. The circuit breaker of one low-voltage switchgear 4 is opposite to one first operation door 13, and another circuit breaker of the other low-voltage switchgear 4 is opposite to the other first operation door 13. The two groups of the low-voltage switchgears 4 are provided with a maintenance channel, a space for an outlet line, and a space for installing cooling fan.

It should be noted that the space for wire outlet refers to the space for wire outlet from the frame circuit breaker 11. If two groups of the low-voltage switchgear 4 are provided, the connecting part 12 is located at the middle position of the top of the low-voltage chamber 1.

In the prefabricated substation, two groups of the low-voltage switchgears 4 are arranged back-to-back, that is, two groups of the low-voltage switchgears 4 are arranged in mirror symmetry. The first operation door 13 is in front of the low-voltage switchgear 4, which may be operated and maintained by opening the first operation door 13, and the back of the low-voltage switchgear 4 is sealed by an aluminum alloy sealing plate.

Specifically, the low-voltage switchgears 4 may support sixteen three-phase AC800V/250A molded case circuit breakers 10 and one frame circuit breaker 11, with a total of three rows, the molded case circuit breakers 10 are in the bottom two rows, and each row of molded case circuit breakers 10 has eight molded case circuit breakers 10, and one frame circuit breaker 11 is in the top row. Alternatively, other number of the molded case circuit breakers 10 may also be provided, which is not limited to the above-mentioned embodiment.

In the prefabricated substation, in order to simplify the structure and facilitate operation, maintenance and repair, the low-voltage chamber 1, the transformer room 2 and the medium-voltage power distribution room 3 are sequentially arranged along the length of the housing. In this way, the entire prefabricated substation has a multiple-row structure.

In the prefabricated substation, the low-voltage switchgear 4 and the transformer 6 are electrically connected through a connector. In order to improve the protection performance, the prefabricated substation further includes a waterproof member 5 arranged on the connector to make the connector waterproof. The waterproof member 5 may be in the transformer room 2 or extend from the low-voltage chamber 1 to the transformer room 2.

The material and shape of the waterproof member 5 may be determined according to actual needs, not limited in this embodiment.

In can be understood that the connector includes a connecting part 12 and a connecting device electrically connected to the connecting part 12 in the transformer 6.

It should be noted that a connecting hole is provided between the low-voltage chamber 1 and the transformer room 2, which ensures the passage of the connector. A high-voltage cable hole and a communication distribution hole are provided between the transformer room 2 and the medium-voltage power distribution room 3. The high-voltage cable hole is the connection cable hole between the high-voltage side of the transformer 6 and the ring main unit 7, the communication distribution hole is the wiring hole for communication and distribution.

In order to reduce the temperature, a heat exchanger is provided on the first operation door 13.

In order to facilitate the hoisting of the transformer 6 and the operation, maintenance and repair on site, an openable and closable top cover is arranged on the top of the transformer room 2. Specifically, the top cover is detachably connected to the housing. If the transformer 6 needs to be hoisted, or the transformer 6 for operation and maintenance is required, the top cover may be directly opened for operation; at the same time, it is also convenient for operating heat dissipation.

In the prefabricated substation, the transformer 6 of the prefabricated substation is a double-split transformer or a double-winding transformer. Specifically, the transformer 6 is a 6750KVA double-split transformer or a 3375KVA double-winding transformer.

If the transformer 6 is a 6750KVA double-split transformer, the capacity of the transformer 6 is 6750KVA, and two groups of the low-voltage switchgears 4 are provided, and the arrangement may make reference to the above-mentioned embodiment. If the transformer 6 is a 3375KVA double-winding transformer, one group of the low-voltage switchgear 4 is provided, and the capacity of the transformer 6 is 3375KVA.

Preferably, in the prefabricated substation, the housing is a container. The size of the container is determined according to actual needs. For example, the container is a 20-foot container. The low-voltage chamber 1 and the medium-voltage power distribution room 3 are of fully sealed structures. The front and back of the transformer room 2 are provided with net doors and sealing plates, respectively, and the top of the transformer room 2 has an openable and closable top cover.

In order to be suitable for outdoor use, the protection level of the prefabricated substation is IP54. Further, the housing conforms to the standard requirements of sea and land transportation of domestic and foreign, and is able to be used worldwide. Alternatively, other protection levels may be determined according to actual need, which is not limited to this.

In order to further optimize the technical solution, the prefabricated substation also includes a partition 8 dividing the medium-voltage power distribution room 3 into a first chamber and a second chamber. The ring main unit 7 of the prefabricated substation is arranged in the first chamber, and a power distribution communication unit 9 of the prefabricated substation is arranged in the second chamber. A second operation door 16 is arranged on the side of the second chamber away from the first chamber, and a third operation door is arranged on the side of the first chamber away from the second chamber.

In the above structure, by arranging the partition 8, the first chamber and the second chamber are independent of each other, realizing the separation of the low pressure and high pressure. Operation and maintenance personnel with only low pressure operation authority cannot enter the high pressure space, which is more in line with safety requirements. At the same time, the power distribution communication unit 9 may be operated once the second operation door opens and the ring main unit 7 may be operated once the third operation door opens, which is more convenient.

The ring main unit 7 protects the transformer 6 and realizes the ring network. The ring main unit 7 is a DCV type ring main unit 7 or a CCV type ring main unit 7. The DCV type ring main unit 7 includes a busbar direct connection cabinet, a load switch cabinet and a circuit breaker cabinet, the CCV type ring main unit 7 includes two switch cabinets and a circuit breaker cabinet.

The power distribution device of the power distribution communication unit 9 includes a dry-type transformer 17 and a power distribution box 14. The communication box 15 of the power distribution communication unit 9 is a smart communication box.

The type of the prefabricated substation is determined according to actual needs. For example, the prefabricated substation is a photovoltaic box-type substation, not limited in this embodiment.

The above illustration of the disclosed embodiments can enable those skilled in the art to implement or use the present application. Various modifications to the embodiments are apparent to the person skilled in the art, and the general principle herein can be implemented in other embodiments without departing from the spirit or scope of the present application. Therefore, the present application is not limited to the embodiments described herein, but should be in accordance with the broadest scope consistent with the principle and novel features disclosed herein.

## Claims

1. A prefabricated substation, comprising: a housing and a low-voltage switchgear (4); wherein the housing has a low-voltage chamber (1), the low-voltage switchgear (4) is arranged in the low-voltage chamber (1), a circuit breaker of the low-voltage switchgear (4) is arranged on one side, and the low-voltage chamber (1) is provided with a first operation door (13) opposite to the circuit breaker.

2. The prefabricated substation according to claim 1, wherein the circuit breaker comprises a molded case circuit breaker (10) and a frame circuit breaker (11), and the molded case circuit breaker (10) is located at the bottom of the frame circuit breaker (11).

3. The prefabricated substation according to claim 2, wherein the frame circuit breaker (11) is provided with a connecting part (12) connected to a transformer (6), and the connecting part (12) is located at the top of the low-voltage chamber (1).

4. The prefabricated substation according to claim 1, wherein two groups of the low-voltage switchgears (4) are provided, and two first operation doors (13) are provided and are respectively located on both sides of the low-voltage chamber (1);
one circuit breaker of one low-voltage switchgear (4) is opposite to one first operation door (13), and another circuit breaker of the other low-voltage switchgear (4) is opposite to the other first operation door (13);
the two groups of the low-voltage switchgears (4) are provided with a maintenance channel, a space for an outlet line, and a space for installing cooling fan.

5. The prefabricated substation according to claim 1, wherein the housing comprises a transformer room (2) and a medium-voltage distribution room (3), and, a transformer (6) of the prefabricated substation is arranged in the transformer room (2), and, a ring main unit (7) and the power distribution communication unit (9) of the prefabricated substation are arranged in the medium-voltage power distribution room (3);
wherein the low-voltage chamber (1), the transformer room (2) and the medium-voltage power distribution room (3) are sequentially distributed along a length direction of the housing.

6. The prefabricated substation according to claim 1, wherein the low-voltage switchgear (4) and the transformer (6) of the prefabricated substation are electrically connected through a connector;
the prefabricated substation further comprises a waterproof member (5) arranged on the connector to make the connector waterproof.

7. The prefabricated substation according to claim 1, wherein the housing comprises a transformer room (2) for placing a transformer (6), and an openable and closable top cover is arranged on the top of the transformer room (2).

8. The prefabricated substation according to claim 1, wherein a transformer (6) of the prefabricated substation is a double-split transformer or a double-winding transformer.

9. The prefabricated substation according to claim 1, wherein the protection level of the prefabricated substation is IP54.

10. The prefabricated substation according to any one of claims 1 to 9, wherein
the housing comprises: a medium-voltage power distribution room (3), and a partition (8) dividing the medium-voltage power distribution room (3) into a first chamber and a second chamber;
a ring main unit (7) of the prefabricated substation is arranged in the first chamber, and a power distribution communication unit (9) of the prefabricated substation is arranged in the second chamber;
a second operation door (16) is arranged on the side of the second chamber away from the first chamber, and a third operation door is arranged on the side of the first chamber away from the second chamber.
